# EUROPEAN PATENT APPLICATION

(11) **EP 4 012 081 A1**
(43) Date of publication of application: **15.06.2022**
(21) Application number: 21213195.7
(22) Date of filing: 08.12.2021
(51) Int. Cl.: D01D 5/00, B32B 5/24, D01F 1/10, D01F 6/80, D04H 1/728

(54) **BREATHABLE WATER RESISTANT FILM**

(30) Priority: 10.12.2020 TW 109143677
(71) Applicant: Taiwan Textile Research Institute, New Taipei City (TW)
(72) Inventor: CHOU, Hsin-Ying, New Taipei City (TW); CHANG, Haw-Jer, New Taipei City (TW); LIN, Chun-Hung, New Taipei City (TW); KUSUMA, Ricky Indra, New Taipei City (TW)
(74) Representative: Winter, Brandl - Partnerschaft mbB

(57) **Abstract**

A breathable water resistant film includes a substrate and a nanofiber layer disposed on the substrate. The nanofiber layer is formed by an electrospinning process. An electrospinning solution used in the electrospinning process includes a first additive, an alcohol, and a second additive. The first additive includes nylon copolymer, and the second additive includes polysilazane.

## Description

### BACKGROUND

### Field of Invention

The present disclosure relates to the breathable water resistant film. More particularly, the present disclosure relates to the breathable water resistant film having nanofibers.

### Description of Related Art

In recent years, the development of the textile technology has focused on introducing the new techniques for improving functions of clothing instead of appearance design thereof. The breathable water resistant fabric acting as a functional fabric can release the moisture on the surface of the user's body and can prevent the moisture in the environment from penetrating into the fabric, thereby being widely applied in the outdoor casual clothing. However, the prior breathable water resistant fabric still has the difficulty in poor air permeability. Therefore, how to provide both air permeability and water resistance to the fabric is an important issue for making the functional fabric.

### SUMMARY

An aspect of the present disclosure relates in general to a breathable water resistant film, which is suitable for applying on fabrics to provide the fabrics with good air permeability and good water resistance.

According to some embodiments of the present disclosure, the breathable water resistant film includes a substrate and a nanofiber layer disposed on the substrate. The nanofiber layer is formed by an electrospinning process, where an electrospinning solution used in the electrospinning process includes a first additive, an alcohol, and a second additive. The first additive includes nylon copolymer, and the second additive includes polysilazane.

In some embodiments of the present disclosure, an average fiber fineness of the nanofiber layer is between 100 nm and 500 nm.

In some embodiments of the present disclosure, each part by volume of the electrospinning solution includes 0.1 parts by volume to 0.2 parts by volume of the second additive.

In some embodiments of the present disclosure, in 100 parts by weight of a mixture of the first additive and the alcohol, the mixture includes 5 parts by weight to 15 parts by weight of the first additive and 85 parts by weight to 95 parts by weight of the alcohol.

In some embodiments of the present disclosure, a solubility of the first additive in the alcohol is between 5 wt% and 15 wt%.

In some embodiments of the present disclosure, the nylon copolymer includes a copolymer of copolyamide and alkoxy-modified nylon 46/66 copolymer.

In some embodiments of the present disclosure, a solubility of the second additive in the alcohol is between 0.5 vol% and 20 vol%.

In some embodiments of the present disclosure, the polysilazane is polysilazane synthetic copolymer resin.

In some embodiments of the present disclosure, the electrospinning process is needleless electrospinning process.

In some embodiments of the present disclosure, the substrate includes polyester, nylon, or polypropylene.

In the aforementioned embodiments of the present disclosure, the breathable water resistant film of the present disclosure includes the nanofiber layer, where the electrospinning solution used to form the nanofiber layer includes the first additive, the alcohol, and the second additive. The first additive includes copolymer, and the second additive includes polysilazane. Therefore, the breathable water resistant film of the present disclosure has good air permeability and good water resistance, thereby being applied to the field related to the breathable water resistant fabrics.

### BRIEF DESCRIPTION OF THE DRAWINGS

Aspects of the present disclosure are best understood from the following detailed description when read with the accompanying figures.
Fig. 1 illustrates an arrangement schematic diagram of the breathable water resistant film according to one embodiment of the present disclosure.
Fig. 2 illustrates a component schematic diagram of the electrospinning solution used to form the nanofiber layer of the breathable water resistant film in Fig. 1.

### DETAILED DESCRIPTION

The present disclosure provides a breathable water resistant film including a substrate and a nanofiber layer disposed on the substrate. The electrospinning solution used to form the nanofiber layer includes a first additive, an alcohol, and a second additive, where the first additive includes nylon copolymer, and the second additive includes polysilazane. As a result, the electrospinning solution has good spinnability, and the nanofiber layer formed by the electrospinning solution has good air permeability and good hydrophobicity. Therefore, the breathable water resistant film including nanofiber of the present disclosure has good air permeability and good water resistance.

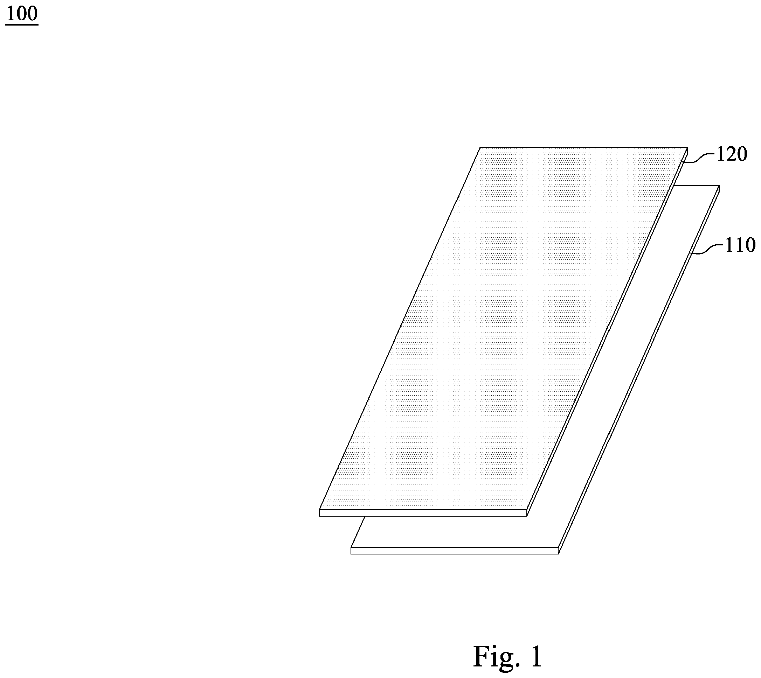

Referring to Fig. 1, Fig. 1 illustrates an arrangement schematic diagram of a breathable water resistant film 100 according to one embodiment of the present disclosure. The breathable water resistant film 100 includes a substrate 110 and a nanofiber layer 120. The substrate 110 may act as a carrier to bear the nanofiber layer 120. In some embodiments, the substrate 110 may include, for example, polyester, nylon, or polypropylene, so that the breathable water resistant film 100 is suitable to be applied on various clothing (such as outdoor casual clothing). When the base material of the substrate 110 is the same as that of the nanofiber layer 120 (for example, both are nylon), the interface between the substrate 110 and the nanofiber layer 120 may be referred as a homogeneous interface. As a result, the substrate 110 and the nanofiber layer 120 have favorable interface adhesion, and the convenience of recycling the breathable water resistant film 100 is thereby improved.

The nanofiber layer 120 is disposed on the substrate 110, and the nanofiber layer 120 is formed by an electrospinning process such as a needleless electrospinning process. Specifically, the nanofiber layer 120 includes nanofibers which are disposed in a stagger manner on the surface of the substrate 110 by the electrospinning process. Therefore, the nanofiber layer 120 formed of the nanofibers is adhesive on the substrate 110. In some embodiments, a basis weight of the nanofiber layer 120 may be between 3 gsm (gram per square meter) and 20 gsm so that the breathable water resistant film 100 has good air permeability. In some embodiments, an average fiber fineness of the nanofibers in the nanofiber layer 120 may be between 100 nm and 500 nm. In some embodiments, an average fiber fineness of 85 wt% to 90 wt% of the nanofibers in the nanofiber layer 120 may be between 100 nm and 500 nm. Therefore, the nanofibers of the nanofiber layer 120 have small and uniform fiber fineness.

The nanofiber layer 120 may conform to the substrate 110 to provide the breathable water resistant film 100 with good air permeability and good water resistance. In some embodiments, an air permeability of the breathable water resistant film 100 may be between 1.0 cfm (cubic feet per minute) and 3.0 cfm, and a moisture permeability of the breathable water resistant film 100 may be higher than 10000 g/m²·24hr. In some embodiments, a water contact angle of the breathable water resistant film 100 may be between 110° and 140°, and a water resistance of the breathable water resistant film 100 may be higher than 7000 mmH₂O.

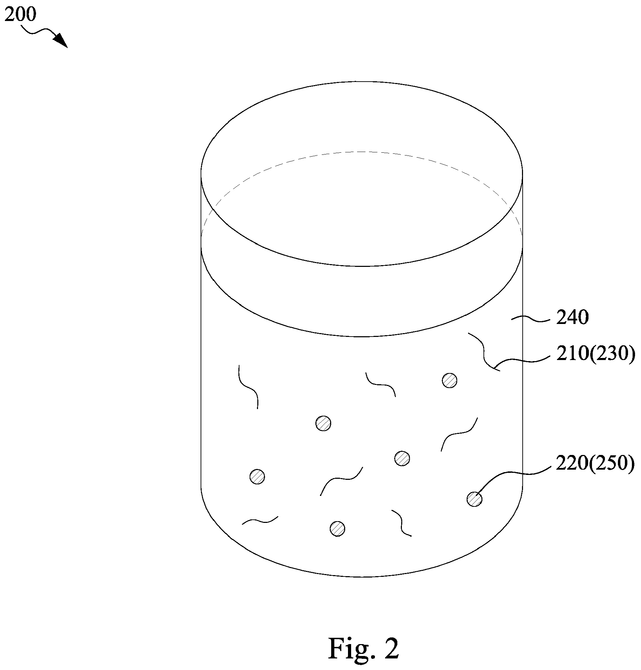

Referring to Fig. 2, Fig. 2 illustrates a component schematic diagram of an electrospinning solution 200 used to form the nanofiber layer 120 in Fig. 1. In this embodiment, the electrospinning solution 200 is used to form the nanofiber layer 120 on the substrate 110. The electrospinning solution 200 includes a first additive 210, a second additive 220, and an alcohol 240, where the first additive 210 and the second additive 220 are evenly dissolved in the alcohol 240 to form the electrospinning solution 200. In some embodiments, the alcohol 240 acting as the solvent in the electrospinning solution 200 has high volatility, low toxicity, and low corrosiveness, so that the electrospinning solution 200 is ecofriendly.

The first additive 210 includes nylon copolymer 230, where the nylon copolymer 230 may be used to form the base material in the nanofiber layer 120. In detail, the nylon copolymer 230 in the first additive 210 may act as the base material of the nanofibers in the nanofiber layer 120. Since the nylon copolymer 230 has high abrasion resistance, the nanofiber layer 120 formed of the nylon copolymer 230 has good abrasion resistance, so that the breathable water resistant film 100 is suitable for outdoor functional clothing.

In some embodiments, the nylon copolymer 230 in the first additive 210 may include a copolymer of copolyamide and alkoxy-modified nylon 46/66copolymer (e.g., Elvamide 8061). Therefore, the first additive 210 may be dissolved in the alcohol 240 to provide the electrospinning solution 200 with good spinnability. For example, a solubility of the first additive 210 in the alcohol 240 may be between 5 wt% and 15 wt%, so that the nanofibers having superfine fiber fineness may be formed by the electrospinning process using the electrospinning solution 200.

The second additive 220 including polysilazane 250 may be used for the hydrophobic modification of the nanofibers, so that the nanofiber layer 120 is provided with good water resistance. In detail, the polysilazane 250 in the second additive 220 is hydrophobic, so that the nanofibers in the nanofiber layer 120 may be hydrophobically modified by the second additive 220 and may provide the nanofiber layer 120 with good water resistance.

In some embodiments, the polysilazane 250 may be, for example, polysilazane synthetic copolymer resin which is soluble in the alcohol 240, so that the electrospinning solution 200 may have good spinnability. For example, when the polysilazane250 is polysilazane synthetic copolymer resin, a solubility of the second additive 220 in the alcohol 240 may be between 0.5 vol% and 20 vol%. Therefore, the nanofibers having superfine fiber fineness may be formed by the electrospinning process using the electrospinning solution 200.

In some embodiments, a mixture of 5 parts by weight to 15 parts by weight of the first additive 210 and 85 parts by weight to 95 parts by weight of the alcohol 240 may be formed first. Then, appropriate amount of the mixture and 0.1 parts by volume to 0.2 parts by volume of the second additive 220 may be mixed to form the electrospinning solution 200. Specifically, 0.1 parts by volume to 0.2 parts by volume of the second additive 220 may be included in each part by volume of the electrospinning solution 200, and 5 parts by weight to 15 parts by weight of the first additive 210 and 85 parts by weight to 95 parts by weight of the alcohol 240 may be included in 100 parts by weight of the mixture of the first additive 210 and the alcohol 240. Since the electrospinning solution 200 includes appropriate ratio of the first additive 210 and the second additive 220 dissolved in the alcohol 240, the electrospinning solution 200 has good spinnability such that the nanofiber layer 120 may have good air permeability and good water resistance.

In the following descriptions, multiple embodiments and comparative examples are listed to analysis and verify the efficacies of the present disclosure. First, the electrospinning solution of each comparative example and embodiment was formed of the components and contents shown in Table 1. Then, the nanofiber layer having the same film thickness was formed on the polyester substrate by the same electrospinning process to obtain the nylon film of each comparative example and the breathable water resistant film of each embodiment. It should be understood that the types and the properties of the mixture, the first additive, the second additive, and the alcohol are described in the aforementioned contents.

**Table 1**

| | Alcohol for forming the mixture | First additive for forming the mixture | Mixture | Second additive |
|---|---|---|---|---|
| Comparative example 1 | 90 | 10 | 10 | 0 |
| Comparative example 2 | 88 | 12 | 10 | 0 |
| Embodiment 1 | 90 | 10 | 9 | 1 |
| Embodiment 2 | 90 | 10 | 8 | 2 |
| Embodiment 3 | 88 | 12 | 8 | 2 |

| | | | | |
|---|---|---|---|---|
| Remark 1: unit for the mixture and the second additive is parts by volume Remark 2: units for the alcohol and the first additive is parts by weight and is count by 100 parts by weight of the mixture | | | | |

The sessile drop method and the water penetration resistance method were performed to test the water contact angle and the water resistance of the nylon films of comparative examples 1 and 2 and the breathable water resistant films of embodiments 1 to 3. The test results are shown in Table 2.

In addition, the cup method and the differential pressure method were performed to test the moisture permeability and the air permeability of the nylon films of comparative examples 1 and 2 and the breathable water resistant films of embodiments 1 to 3. The test results are shown in Table 2.

**Table 2**

| | Average fiber fineness (nm) | Water contact angle (°) | Water resistance (mmH₂O) | Moisture permeability (g/m^{2.}24hr) | Air permeability (cfm) |
|---|---|---|---|---|---|
| Comparative example 1 | 183 | 0 | Not water resistant | N/A | 1.7 |
| Comparative example 2 | 255 | 0 | Not water resistant | N/A | 1.64 |
| Embodiment 1 | 275 | 120 | >1336 | N/A | 1.75 |
| Embodiment 2 | 290 | 129 | >7349 | >10000 | 1.67 |
| Embodiment 3 | 295 | 132 | >7783 | >10000 | 1.32 |

As shown in Table 2, the electrospinning solutions used to form the nylon films of the comparative examples 1 and 2 do not include the second additive. As a result, the nylon films of the comparative examples 1 and 2 are not water resistant. In contrast, the breathable water resistant films of the embodiments 1 to 3 have obviously higher water contact angles and water resistances, thereby showing that the aforementioned second additive provide good water resistance to the breathable water resistant film. In addition, the air permeability of the breathable water resistant films of the embodiments 1 to 3 are all higher than 1.0 cfm, which shows that the breathable water resistant films have favorable air permeability. As a result, the breathable water resistant films meet the industry requirements and are suitable for various functional clothing.

According to the aforementioned embodiments of the present disclosure, the breathable water resistant film of the present disclosure includes the substrate and the nanofiber layer formed by the electrospinning process. The electrospinning solution used to form the nanofiber layer includes appropriate amount of the first additive, the alcohol, and the second additive, where the first additive includes the nylon copolymer, and the second additive includes the polysilazane. Therefore, the breathable water resistant film of the present disclosure has both good water resistance and good air permeability.

## Claims

1. A breathable water resistant film (100) being **characterized by** comprising:
a substrate (110); and
a nanofiber layer (120) disposed on the substrate (110), the nanofiber layer (120) is formed by an electrospinning process, wherein an electrospinning solution (200) used in the electrospinning process comprises:
a first additive (210) comprising nylon copolymer (230);
an alcohol (240); and
a second additive (220) comprising polysilazane (250).

2. The breathable water resistant film (100) of claim 1, wherein an average fiber fineness of the nanofiber layer (120) is between 100 nm and 500 nm.

3. The breathable water resistant film (100) of claim 1, wherein each part by volume of the electrospinning solution (200) comprises 0.1 parts by volume to 0.2 parts by volume of the second additive (220).

4. The breathable water resistant film (100) of claim 1, wherein in 100 parts by weight of a mixture of the first additive (210) and the alcohol (240), the mixture comprises 5 parts by weight to 15 parts by weight of the first additive (210) and 85 parts by weight to 95 parts by weight of the alcohol (240).

5. The breathable water resistant film (100) of claim 1, wherein a solubility of the first additive (210) in the alcohol (240) is between 5 wt% and 15 wt%.

6. The breathable water resistant film (100) of claim 1, wherein the nylon copolymer (230) comprises a copolymer of copolyamide and alkoxy-modified nylon 46/66 copolymer.

7. The breathable water resistant film (100) of claim 1, wherein a solubility of the second additive (220) in the alcohol (240) is between 0.5 vol% and 20 vol%.

8. The breathable water resistant film (100) of claim 1, wherein the polysilazane (250) is polysilazane synthetic copolymer resin.

9. The breathable water resistant film (100) of claim 1, wherein the electrospinning process is needleless electrospinning process.

10. The breathable water resistant film (100) of claim 1, wherein the substrate (110) comprises polyester, nylon, or polypropylene.
